# EUROPEAN PATENT APPLICATION

(11) **EP 2 869 580 A1**
(43) Date of publication of application: **06.05.2015**
(21) Application number: 13191678.5
(22) Date of filing: 05.11.2013
(51) Int. Cl.: H04N 21/258, H04N 21/466, H04N 21/658, H04N 21/41, H04N 21/442, G06F 17/30

(54) **Method and system for providing a program suggestion to a user of a television**

(71) Applicant: Kim, Intae, 1082 MK Amsterdam (NL)
(72) Inventor: Kim, Intae, 1082 MK Amsterdam (NL)
(74) Representative: van Oeffelt, Abraham

(57) **Abstract**

The present invention relates to a system and method for providing a suggestion to a user of a television, comprising: providing an evaluation signal by the user, which is emitted explicitly by dedicated method; receiving the evaluation signal; sending the evaluation signal to a collecting server; generating a timestamp signal; sending a timestamp to the collecting server; sending a unique ID to the collecting server; generating a location indicator; sending a location indicator to the collecting server; looking up, on a Program Guide Server, a program the user was watching; sending the description of the program the user was watching to an Analysis server; gathering information related to the program the user was watching by the Analysis server; sending the information by way of a suggestion to the user by a feedback server. The invention further relates to a method for configuring a device like a smartphone, tablet or PC as a second screen for watching or hearing experiences.

## Description

The present invention relates to a method and system for providing a suggestion to a user of a television. In particular, providing such suggestion may comprise gathering user preferences toward contents like TV programs, Radio channels, Commercials, Music Preferences, Product Placement, Movies and so on.

More and more contents are digitized and the way of contents consumption are rapidly
changing and increasing. Compared to the era of old linear television, it becomes difficult to find user's favorite contents and information due to the flood of the contents through various media like Satellite, Cable, Terrestrial and Internet.

Another important issue is privacy, since many people don't like to share their private data like preferences, favorites and don't agree to let their data be collected automatically without giving their consent.

It is a goal of the present invention to help users to find their favorite program, product and related information without the disadvantages of the prior art as mentioned above.

The invention thereto proposes a method for providing a program suggestion to a user of a television, comprising:
- actively providing an evaluation signal by the user;
- Receiving the evaluation signal;
   o Sending the evaluation signal to a collecting server;
- Looking up, on a Program Guide Server, a program the user was watching;
   o Sending the description of the program the user was watching to an Analysis server;
- Gathering information related to the program the user was watching by the Analysis server;
   o Sending the information to the user by a feedback server.

The advantage of the method according to the invention is that no information is gathered or spread automatically by any device, but only upon providing an evaluation signal by a user, information is collected and sent to a server. The evaluation signal may be received directly by the television, that is, from the remote control, or indirectly, for instance via a set-top box, a gesture recognition device, or - when it's sent by a smart-phone or tablet computer, via a data-network. In particular cases however, the smart-phone or tablet computer may be configured for direct communication with the television, via Infra-Red, Bluetooth or another near field communication method. The smart-phone or tablet or even remote-control or set-top box may further be configured for sending information regarding the channel the user is watching to the collecting server. Such information may be retrieved automatically or be provided by the user.

The evaluation signal may consist of a timestamp, a unique id, a location (if any) and data.

The collecting server fills in omitted fields of the evaluation event and then stores the evaluation signal into the database. For example, the location information can be identified using a peer IP address, in that case the collecting server fills in the location information.

When the television is equipped with Wifi or LAN communication means, it may be configured for sending the evaluation signal to a collecting server, or this may be done by regular interactive television channels. The same action may in an alternative embodiment be performed by a set-top box or by additional dedicated communication hardware. A timestamp signal may be added, either by the remote control, by the smart-phone or tablet computer, by the television or even by a dedicated receiver, which may also be the collecting server, in those cases where the communication delays are relatively short, so that the time of sending and the time of receiving differ less than a predetermined threshold delay. The information may be sent to the users television by a feedback server, or to his smart-phone or tablet computer.

The information gathered by the analysis server may then be used as metadata to provide useful information to the user. This useful information may for instance cover content related information such as next broadcasting date, synopsis, genre, castings, or similar content, or product or service related information (when the evaluation event takes place during an evaluation signaled during a commercial or product placement.

By analyzing the actively collected data, the user can get the feedback from the related
service provider (e.g. a video contents provider or an online purchasing service provider).
His or her mobile devices, for instance a smartphone, may be used as a tool for delivering this information.

While a user is watching a movie that triggers his interest, he might be inclined to look up the movie using his smart phone. To look up the movie, according to the state of the art, one needs to know the movies name in the first place and to enter the text using his smartphone in addition, which may be considered slow and cumbersome.

However, with the aid of the present invention, when a user finds a movie interesting, he pushes the evaluation button on his or her remote control. After 2 or 3 seconds, a dedicated application on his smartphone will provide the details of the movie and if available, related information like a DVD or Book over the movie.

Or, when the user is watching a commercial or an interesting product on a home shopping
channel, he just has to push the button on his remote and then the purchasing guidance will appear on his smartphone.

In a practical embodiment, at least two servers from the group of the collecting server, the program guide server, the analysis server; and the feedback server may be formed by or integrated in the same apparatus. This may increase the simplicity and/or efficiency of a system according to the present invention.

In a further embodiment the step of actively providing an evaluation signal by the user comprises at least one from the options of touching a button, pressing a knob, or making a gesture. Such button or knob may form part of or be present on a remote control or a telephone, and be a hardware button or a configurable part of a touch screen of a smart phone or a tablet computer. In addition or instead, the step of making a gesture may for instance be registered by a dedicated gesture detecting device, like a remote control.

The invention further relates to a system for providing a program suggestion to a user of a television, comprising means for receiving an evaluation signal, a collecting server, configured for generating a timestamp signal, generating a unique ID, sending a unique ID to the collecting server; generating a location indicator; sending a location indicator to the collecting server; a program guide server, for looking up a program the user was watching and sending the name of the program the user was watching to an analysis server, which serves for gathering information related to the program the user was watching; and a feedback server, for sending the information to the user.

At least two of the collecting server; the program guide server; the analysis server; and the feedback server may be formed by or integrated in the same apparatus. The means for receiving the evaluation signal may comprise a television or a set-top box for a television.

A remote control for a television may comprise a dedicated evaluation button, configured for providing an evaluation signal, but instead, it may comprise a smartphone or a tablet computer, configured for providing configured for providing an evaluation signal, by touching or moving an item on a screen, or making a gesture with the entire device.

The invention may in particular be used in the following cases:
When a user finds a program interesting and wants to receive details while watching TV, he sends an evaluation signal and gets the information regarding the program details, like a broadcasting date of next episodes and/or indications where to buy a DVD, BD, CD and so on.

During the commercial break a user may find a product interesting and may want to review or buy it; he sends an evaluation signal to the server and get the product details and a link where to purchase it.

If a user shows an interest in a DVD or BD while watching, disc information of said
DVD
or BD is sent to the server and the user gets the details of the content.

By analyzing evaluation signals from a user, the feedback server sends a notification of the content or product or service which might interest the user.

The evaluation signal may also be used by a TV Program as a voting tool or way of showing interest.

Content, product or service providers can utilize the evaluation signal database for analysis and planning.

In a further embodiment, the present invention relates to a method for configuring a device like a smartphone, tablet or PC as a second screen for watching or hearing experiences. The device is then suitable for viewing and hearing contents like the ones normally accessible via television, set top box or media player.

User needs to pair her or his feedback device to their watching device to get information
later on. The present invention proposes a method of pairing to facilitate the process to be undertaken. The method according to the present invention comprises the steps of:
Entering a communication ID of a feedback device into a watching device, wherein the communication ID can be a phone number or a unique network ID.
Encrypting the communication ID and a unique ID of the watching device by the watching device, and sending them to a pairing server.
Decoding the data by the pairing server and pushing a notification message to the feedback device.
Handling an input message and asking a confirmation to a user by a dedicated application on the feedback device.
Storing the communication ID and the unique ID in the database for push notification upon confirmation by the user.

The invention will now be elucidated into more detail with reference to the following figures, wherein:
- Figures 1a-f show multiple embodiments of a device for providing an evaluation signal;
- Figures 2-5 show flowcharts of the method according to the present invention.

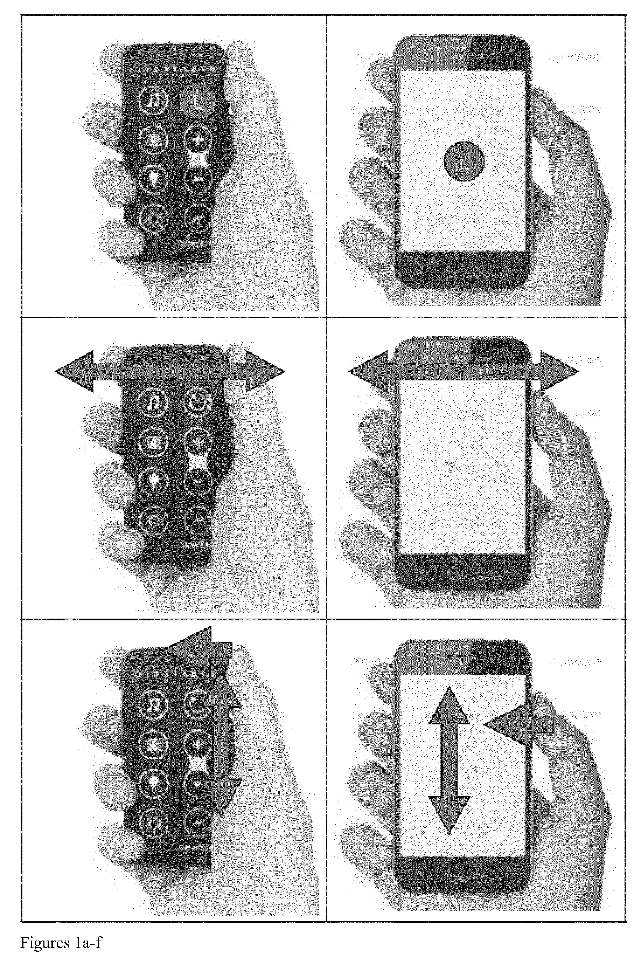

Figure 1a shows a dedicated remote control device for providing an evaluation signal. A button indicating an "L" for "Like" is present, that can be pressed by a user to indicate that he likes a program currently watched. Figure 1b shows a similar button, which is displayed in an app on a smartphone. Instead, a tablet computer may also be used. Figure 1c shows a dedicated remote control device for providing an evaluation signal. No button is present, but the apparatus can be moved in the direction of the arrow to indicate that he likes a program currently watched. Figure 1d shows an app on a smartphone, having the same functionality. A tablet computer may also be used. Figure 1e shows a dedicated remote control device for providing an evaluation signal. This time, an area can be groped or tapped by a user to indicate that he likes a program currently watched. Figure 1f shows the same in an app on a smartphone. Also here, a tablet computer may be used.

The table below shows a data model of an evaluation signal, called LEvent (like-event), comprising the following information:

| Event Type | Description |
|---|---|
| Timestamp | Datetime information to look up the content in interst |
| Location | Using Peer IP Address, WIFI AP Information, GPS etc. |
| DataEx | Extended information which can be used to better describe the event itself. For example this field can describe the Broadcasting Service Name through which user is watching or can describe the Disc (DVD, BD) information which is being played now. |
| UniqueID | ID of Source (User ID) |

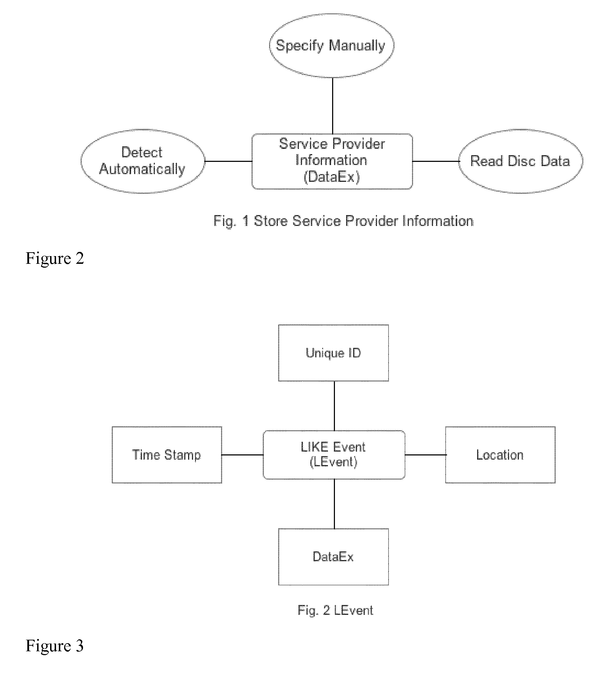

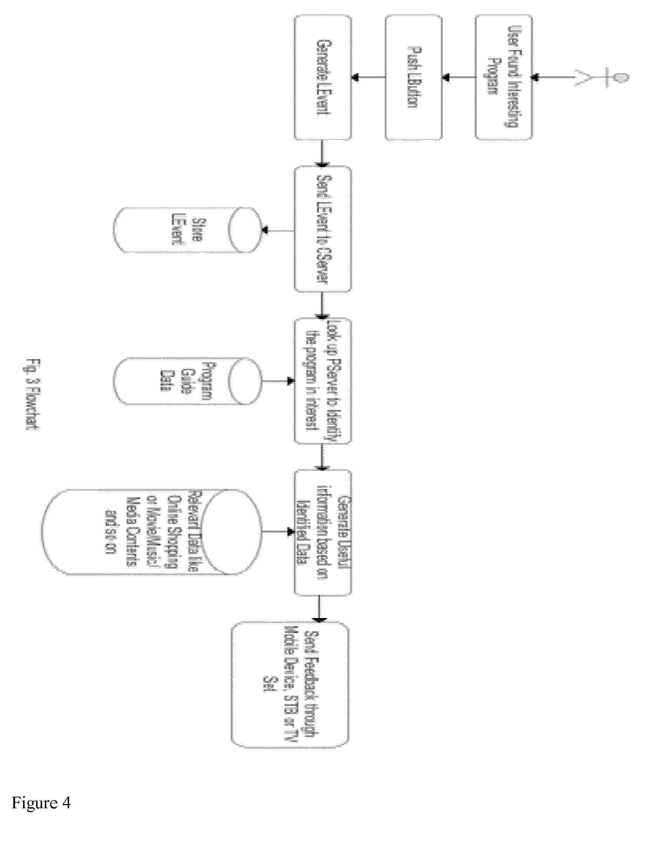

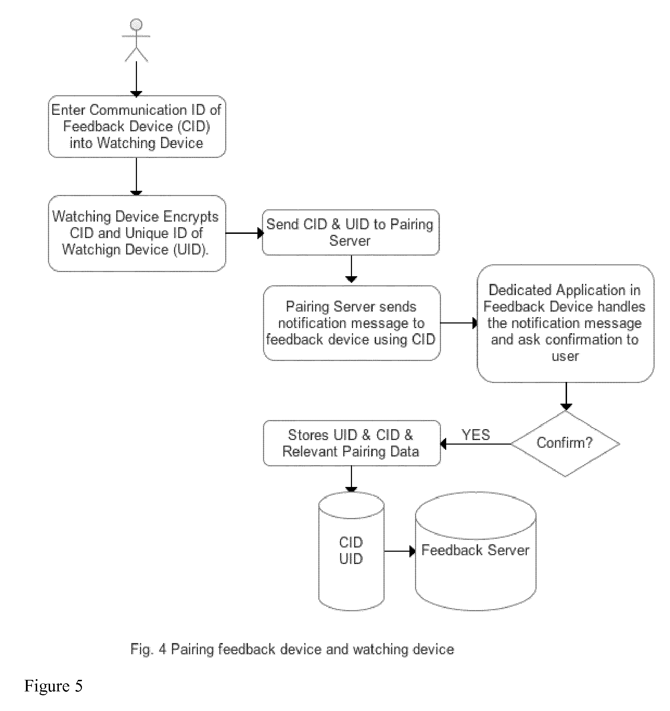

Figures 2-5 show self explanatory flowcharts of the methods according to the present invention. Besides the examples shown, the invention may be embodied in various ways, which are all believed to fall within the scope of the present invention.

## Claims

1. Method for providing a suggestion to a user of a television, comprising:
- Providing an evaluation signal by the user;
- Receiving the evaluation signal;
- Sending the evaluation signal to a collecting server;
- Looking up, on a Program Guide Server, a program the user was watching;
o Sending the name of the program the user was watching to an Analysis server;
- Gathering information related to the program the user was watching by the Analysis server;
o Sending the information by way of a suggestion to the user by a feedback server.

2. Method according to claim 1, wherein at least two servers from the group of:
- the collecting server;
- the program guide server;
- the analysis server; and
- the feedback server;
are formed by or integrated in the same apparatus.

3. Method according to claim 1or 2, wherein the step of actively providing an evaluation signal by the user comprises at least one from the options:
- touching a button;
- pressing a knob;
- making a gesture.

4. Method according to claim 3, wherein the step of actively providing an evaluation signal by the user is performed on a remote control or a telephone.

5. Method according to claim 3, wherein the step of making a gesture is registered by a dedicated gesture detecting device.

6. Method for configuring a device like a smartphone, tablet or PC as a second screen for watching or hearing experiences, comprising the steps of:
- Entering a communication ID of a feedback device into a watching device;
- Encrypting the communication ID and a unique ID of the watching device by the watching device, and sending them to a pairing server;
- decoding the data by the pairing server and pushing a notification message to the feedback device;
- handling an input message and asking a confirmation to a user by a dedicated application on the feedback device;
- storing the communication ID and the unique ID in the database for push notification upon confirmation by the user.

7. System for providing a suggestion to a user of a television, comprising:
- means for receiving an evaluation signal;
- a collecting server, configured for:
o Generating a timestamp;
o Storing a unique ID;
o Identifying a location information;
- a program Guide Server, for
o looking up a program the user was watching;
o Sending the description of the program the user was watching to an Analysis server;
- An Analysis server, for:
o Gathering information related to the program the user was watching
- A feedback server, for
o sending the information by way of a suggestion to the user.

8. System according to claim 7, wherein at least two of:
- the collecting server;
- the program guide server;
- the analysis server; and
- the feedback server;
are formed by or integrated in the same apparatus.

9. System according to any of the preceding claims, wherein the means for receiving the evaluation signal comprise a television or a set-top box for a television.

10. System according to any of claims 7-9, comprising a remote control for a television, comprising a7 dedicated evaluation button, configured for providing an evaluation signal.

11. System according to any of claims 7-9, comprising a smartphone or a tablet computer, configured for providing configured for providing an evaluation signal, by touching or moving an item on a screen, or making a gesture with the entire device.
